(19) Europäisches Patentamt
European Patent Office
Office européen des brevets

(11) **EP 2 194 815 B1**

(12) **EUROPEAN PATENT SPECIFICATION**

(45) Date of publication and mention
of the grant of the patent:
**17.12.2014 Bulletin 2014/51**

(21) Application number: **07835080.8**

(22) Date of filing: **03.10.2007**

(51) Int Cl.:
**B60P 3/39** *(2006.01)* **B62D 33/06** *(2006.01)*

(86) International application number:
**PCT/SE2007/000878**

(87) International publication number:
**WO 2009/045131 (09.04.2009 Gazette 2009/15)**

(54) **VEHICLE BED-COUCH**

FAHRZEUG-BETTCOUCH

LIT-COUCHETTE DE VÉHICULE

(84) Designated Contracting States:
**AT BE BG CH CY CZ DE DK EE ES FI FR GB GR
HU IE IS IT LI LT LU LV MC MT NL PL PT RO SE
SI SK TR**

(43) Date of publication of application:
**16.06.2010 Bulletin 2010/24**

(73) Proprietor: **Volvo Lastvagnar AB
405 08 Göteborg (SE)**

(72) Inventors:
• **TORGILSMAN, Ulf
SE-443 41 Grabo (SE)**
• **THURESSON, Niklas
S-442 97 Kode (SE)**

(74) Representative: **Fröhling, Werner Otto
Volvo Technology Corporation
Corporate Patents 06820, M1.7
405 08 Göteborg (SE)**

(56) References cited:
| | |
|---|---|
| EP-A1- 1 207 074 | WO-A1-94/22349 |
| WO-A1-2005/055771 | WO-A1-2008/085120 |
| CH-A- 156 706 | GB-A- 1 538 079 |
| GB-A- 2 215 199 | GB-A- 2 215 199 |
| GB-A- 2 328 612 | GB-A- 2 339 147 |
| SE-C2- 518 584 | US-A- 1 721 647 |

**Description**

**Field of the invention**

The present invention relates to vehicle beds or couches, for example to vehicle-cab beds or couches.

**Background of the invention**

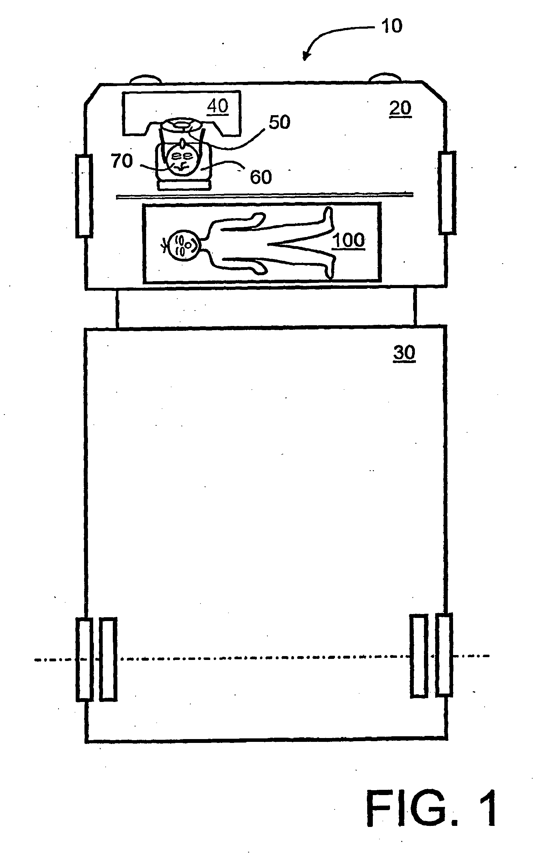

Beds and couches in cabs of heavy commercial vehicles are well known. In Figure 1, such an example vehicle is indicated generally by **10**. The vehicle **10** includes a cab **20** coupled to a trailer **30**. The cab **20** includes a steering console **40** including a steering wheel **50** and driver's seat **60.** In operation, a driver **70** is seated at the console **40** and adjusts controls of the console **40** and the steering wheel **50** for controlling and guiding a trajectory of the vehicle **10**. In a rear portion of the cab **20,** there is included a bed or couch **100** behind the console **40**; optionally, a safety barrier **110,** for example a safety net, is included between the bed or couch **100** and the console **40** to provide protection to a person sleeping or resting on the bed or couch **100** in an event of vehicular impact, namely a crash event.
Heavy commercial vehicles are costly investments. Competition amongst contemporary haulage companies requires their heavy commercial vehicles to be utilized to a fullest extent possible. It is therefore conventional practice for drivers of heavy commercial vehicles to sleep and rest in cabs of such vehicles when not driving the vehicles. Moreover, it is contemporary practice for heavy goods vehicles to have first and second drivers, wherein the first driver sleeps or rests on the bed or couch **100** of the cab **20** whilst the second driver drives the vehicle **10,** and vice versa, so that the vehicle **10** is susceptible to being kept in nearly constant use.
With regard to quality of life for the aforesaid first and second drivers when working with the vehicle **10,** a quality of comfort provided by the bed or couch **100** is very important. For example, as elucidated in a published Swedish patent no. SE 518 584 C2, it is important that a bed for incorporation into a vehicle cab has a requisite width for providing a comfortable rest or sleep. In the published Swedish patent no. SE 518 584 C2, there is described a bed arrangement with a variable bed surface. The bed arrangement comprises a first bed element with a first bed surface, and at least one supplementing peripheral second bed element with a second bed surface. Moreover, the bed arrangement also includes connecting devices which allow positioning of the second bed relative to the first bed element so that the bed arrangement is provided with a bed surface which comprises the first bed surface and the second peripheral bed surface. The second peripheral bed surface comprises a material body made of an elastic material, wherein the material body is compressible for adjusting a size of the second bed surface. The first bed surface has a size which is considerably greater than the second bed surface; the first bed surface is thereby operable to function as a primary supporting surface for a driver resting on the bed arrangement and is operable to exhibit a constant non-adjustable support stiffness in use.
US-A-1721647 is an adjustable bed-couch with spring elements and a canvas apron as a load-spreading arrangement.
A problem arising in practice is that drivers have different body weights and also different needs for support when resting or sleeping. Such support can depend, for example, on therapeutic need of the driver on account of driving activities potentially giving rise to repetitive strain injury or limb stiffness. There therefore arises a need for an alternative bed arrangement with more possibilities for adjustment.
Air beds are known which can be inflated and thereby adjusted to user preference. However, such air beds have not found widespread use for vehicle cabs where a greater degree of comfort than can be provided by inflatable air beds is desired.

**Summary of the invention**

According to the present invention there is provided a bed-couch as claimed in claim 1, 2 or 3.

**Description of the diagrams**

Embodiments of the present invention will now be described, by way of example only, with reference to the following diagrams wherein:

Figure 1          is an illustration of a contemporary vehicle whose cab includes a bed or couch for driver sleeping or resting;

Figure 2          is an illustration of an arrangement of a bed-couch;

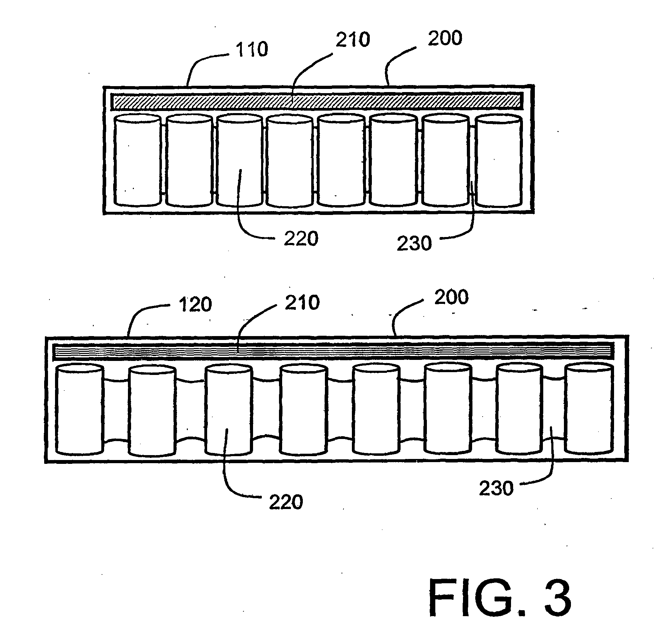

Figure 3          is a cross-sectional illustration of the bed-couch of Figure 2;

| Figure 4 | comprises illustrations regarding implementations of load spreading layers included within the bed-couch of Figure 2; |
|---|---|
| Figure 5 | is a perspective schematic view of the bed-couch of Figure 2 in two conditions of extension providing variable support stiffness; |
| Figures 6a and 6b | are plan schematic views of the bed-couch of Figure 2, illustrating two alternative spring configurations; |
| Figure 7 | is a schematic illustration of the bed-couch of Figure 2 in situ in a vehicle cab, the bed-couch being in a retracted compact state; and |
| Figure 8 | is a schematic illustration of the bed-couch of Figure 2 in situ in a vehicle cab, the bed-couch being in a deployed state: |

**Description of embodiments of the invention**

In overview, the present description is concerned with a modified implementation of the aforesaid bed or couch **100** for achieving adjustable spring stiffness per unit area of its upper load-bearing surface so that the driver **70** of the vehicle **10** is able to adjust the modified implementation of the bed or couch **100** for optimal comfort. Such optimal comfort is potentially dynamically variable depending upon a body weight of the driver **70,** and a physical state of the driver **70** such as a level of driver **70** fatigue and driver **70** strain injury. The modified implementation of the aforesaid bed or couch **100** pursuant to the present description is concerned with providing an array of spring elements whose mutual spatial separation is susceptible to being driver-adjusted so as to affect an adjustment of effective spring stiffness per unit area of the modified implementation of the aforesaid bed or couch **100.** Further implementations are concerned with ensuring that array of spring elements incorporated into the modified implementation of the aforesaid bed or couch **100** spread themselves out in a desirably uniform manner during comfort adjustment of the modified bed or couch **100.**

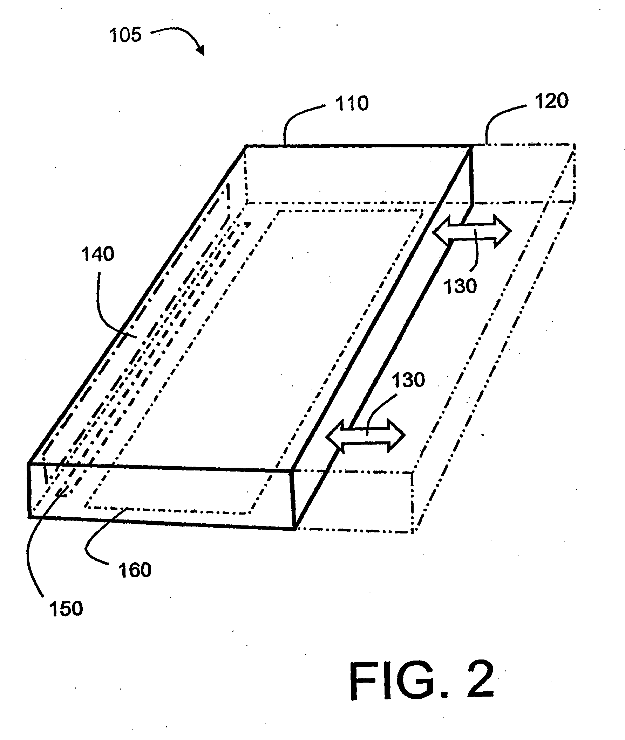

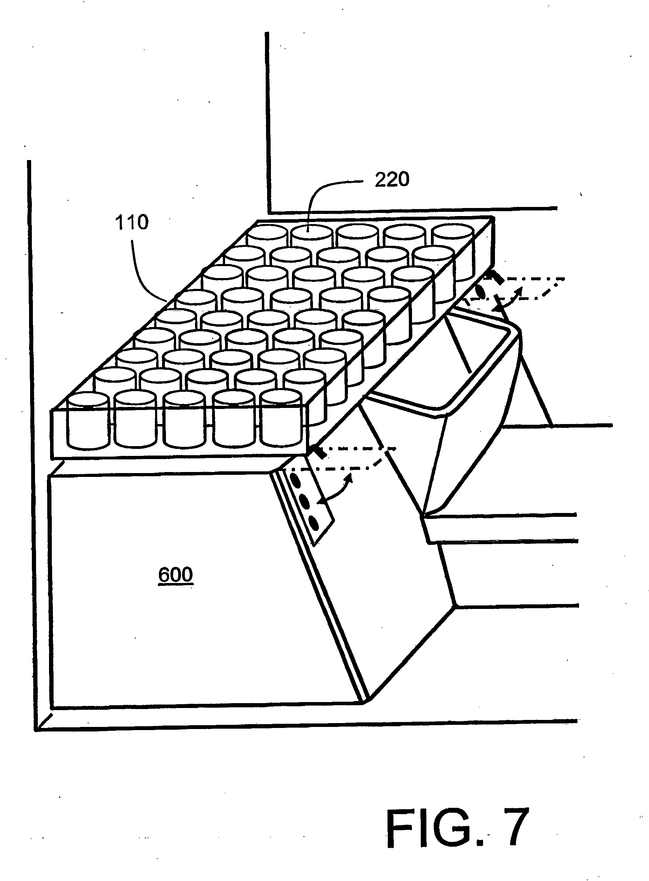

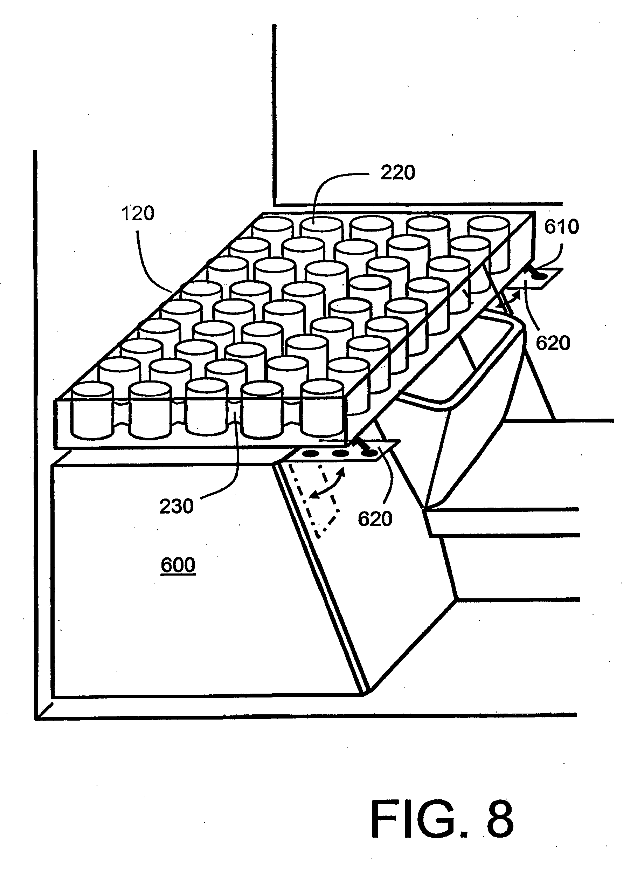

Referring to Figure 2, an arrangement of a bed or couch is indicated generally by **105.**; the bed or couch **105** will hereinafter be referred to as "bed-couch **105**". The bed-couch **105** is driver-adjustable in size between a retracted compact non-deployed state denoted by **110** and an expanded deployed state denoted by **120.** The bed-couch **105** is relatively stiffer per unit area thereof on its upper surface when in the retracted state **110,** and is relatively softer per unit area thereof on its upper surface when in the expanded state **120.** The bed-couch **105** is continuously adjustable in stiffness per unit area between the retracted state **110** and the expanded state **120** by adjusting a transverse width of the bed-couch **105** as denoted by arrows **130.** For example, the bed-couch **105** is 2 metres long, 0.8 metres wide and 25 cm thick in the retracted state **110,** and the bed-couch **105** is 2 metres long, 1,2 metres wide and 25 cm thick in the expanded state **120.** Optionally, the bed-couch **105** is implemented so that its underside is slidably supportable on a supporting surface **160,** for example a bench structure of the cab **20** of the vehicle **10** as illustrated in Figures 7 and 8. The bed-couch **105** is implemented to be firmly couplable to an attachment surface of the cab **20** at one or more of:

(a) a side surface **140** of the bed-couch **105;** and
(b) an underside edge surface **150** of the bed-couch **105.**

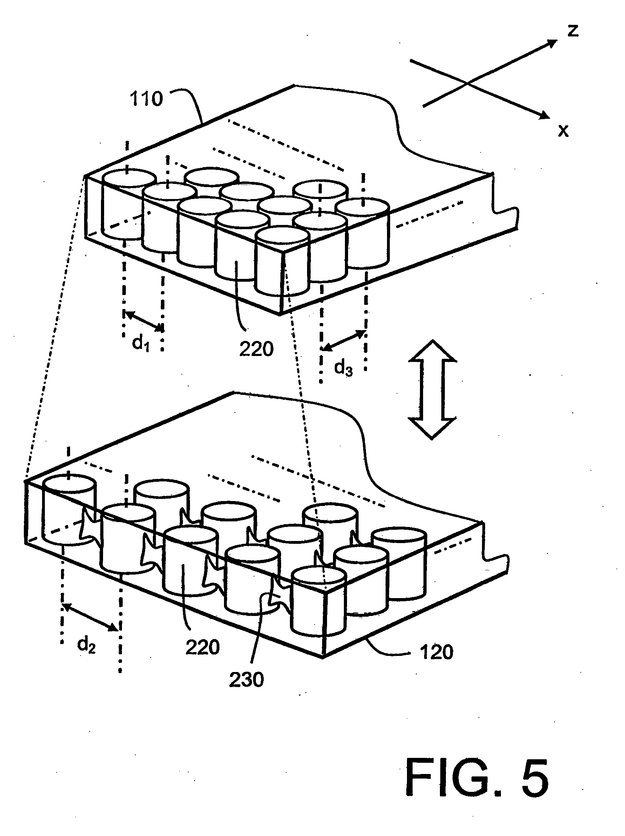

The bed-couch **105** will now be described In greater detail with reference to Figure 5. In Figure 5, a schematic illustration of a cross-section through the bed-couch **105** is shown. The bed-couch **105** comprises a spatially distributed array of spring elements **220** mutually coupled together by flexible coupling elements **230.** Optionally, the spring elements **220** are mutually similar. Alternatively, the spring elements **220** can be mutually different; for example, those spring elements **220** which are near a periphery of the bed-couch **105** are optionally stiffer than those spring elements **220** near a central region of the bed-couch **105** so that the bed-couch **105** naturally forms a retaining depression at its centre for preventing the driver **70** from vibrating out of the bed-couch **105** when the vehicle **10** is being driven by another driver and the driver **70** is resting or sleeping.

The spring elements **220** are each beneficially implemented as one or more of:

(a) one or more coiled helical springs implemented using one or more spirals of metal spring wire, for example steel wire and/or phosphor bronze wire;
(b) one or more coiled helical springs implemented using one or more spirals of molded plastics material, for example nylon and/or polypropylene;
(b) an expanded porous plastics material such as expanded polyurethane foam;
(c) a porous natural polymer material such as porous natural rubber;

(d) one or more inflated cavities bounded by flexible substantially gas-tight walls;
(e) a flexible leaf-spring arrangement Implemented using one or more of metal and plastics material leaf springs.

The flexible couple elements **230** are beneficially implemented to couple spring elements **220** into rows orientated substantially in a direction along the arrows **130** in Figure 2. The flexible coupling elements **230** are beneficially implemented as one or more of:

(a) one or more bands, strips or webs of elastic material, for example natural rubber and/or silicone rubber and/or polyurethane;
(b) a molded elastic chain of components fabricated using nylon, polyurethane, polypropylene, or similar elastic polymer plastics material;
(c) a chain of flexible spring metal hoops operable to exhibit longitudinal elastic behaviour; and
(d) an inflatable and deflatable air envelope operable when inflated to separate its respective neighbouring spring elements **220,** and operable when deflated to enable the neighbouring spring elements **220** to substantially mutually abut.

The bed-couch **105** also comprises an outer fabric layer **200** implemented in flexible material which is susceptible to stretch when the bed-couch **105** is progressively adjusted from its retracted non-deployed state **110** to its fully deployed state **120**. The fabric layer **200** is beneficially implemented as a very loosely woven coarse-thread fabric which is highly resistant to wear, for example loosely-woven nylon fabric, loosely-woven polyester fabric, loosely-woven cotton fabric, loosely-plaited leather fabric, polyurethane fabric, loosely-woven linen fabric.

In order to render the bed-couch **105** sufficiently comfortable when laid directly upon by the driver **70,** the outer fabric layer 200 is beneficially implemented to be several layers thick, for example to a total multi-layer thickness in a range of 3 mm to 15 mm, more optionally in a range of 5 mm to 10 mm thick. Optionally, to further reduce individual spring elements **220** being felt when the driver **70** is resting on the bed-couch **105,** there is included a load-spreading feature denoted by **210**. The load-spreading feature **210** is beneficially extensible as the bed-couch **105** Is progressively adjusted between its compact retracted state **110** and Its fully deployed state **120**. When the outer fabric layer **200** is sufficiently thick to provide significant load spreading, the load-spreading feature **210** is optionally omitted.

Optionally, the load-spreading feature **210** is coupled only at its central longitudinal axis to a corresponding central longitudinal row of spring elements **220** and slidably retained down in position by the outer fabric cover **200** onto the array of spring elements **220**; the load-spreading feature **210** is then of a width corresponding to the bed-couch **105** when in its retracted state **110** such that edges of the array of spring elements **220** are then not covered by the load-spreading feature **210** when the bed-couch **105** is in its deployed extended state **120**. It would be abnormal for the driver **70** to apply his/her weight at the periphery of the bed-couch **105** when in its expanded deployed state **120**.

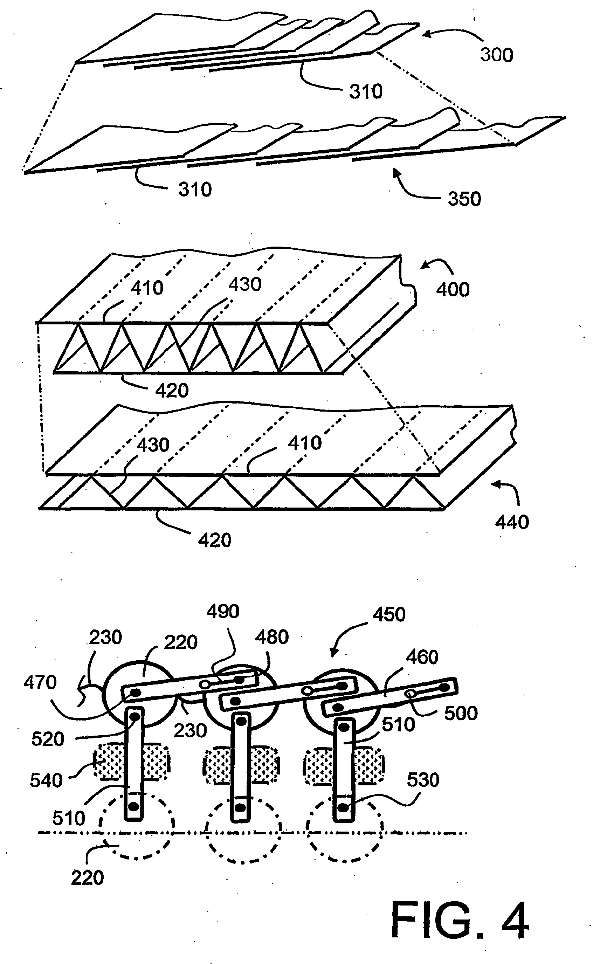

When adjustable in area, the load-spreading feature **210** is optionally, in a first arrangement, implemented as shown in cross-section in an upper portion of Figure 4 and indicated by **300** in a retracted non-deployed state, and by **350** in fully extended deployed state. As indicated by **300, 350**, the load-spreading feature **210** is implemented as a series of interleaved flexible sheets **310** which are operable to glide with respect to one another to accommodate adjustment of the bed-couch **105** between its contracted state **110** and Its extended deployed state **120**. The interleaved flexible sheets **310** are interleaved to a greater extent when the bed-couch **105** is in its non-deployed retracted state **110** in comparison to being interleaved to a lesser extent when the bed-couch **105** is in its fully deployed expanded state **120**. The interleaved flexible sheets **310** are beneficially implemented from a polymer plastics material for example polytetrafloroethylene (PTFE), PTFE-coated silicon rubber, nylon, polyethylene or similar. Moreover, the interleaved flexible sheets **310** are beneficially elongate in a direction substantially parallel with an elongate longitudinal axis z of the bed-couch **105** as shown in Figure 5. Furthermore, the interleaved flexible sheets **310** are beneficially coupled to their respective spring elements **220** so that their degree of interleaving is uniformly distributed amongst the sheets **310** as the bed-couch **105** is adjusted in stiffness in operation. Optionally, the interleaved flexible sheets **310** are flexibly coupled together at their uppermost edges and/or at their lowermost edges, for example using extensible elastic strips, so that adjustment of the bed-couch **105** in a direction denoted by x in Figure 5 is equally distributed amongst the sheets **310** in use.

In a second arrangement of the load-spreading feature **210** as illustrated in a middle portion of Figure 4, there is included a zig-zag concertina-type component **430** whose folds are elongate in a direction substantially parallel to the longitudinal axis z of the bed-couch **105** as shown in Figure 5. The component **430** is shown in its retracted state as indicated by **400** and its extended deployed state by **440**. The component **430** is optionally bounded by load-spreading flexible sheets **410, 420,** for example implemented as a stretchly loosely-woven thread fabric, so that individual folds of the component **430** are not substantially felt by the driver **70** when sleeping or resting on the bed-couch **105**.

In a third arrangement of the load-spreading feature **210** as illustrated at a lower portion of Figure 4 and indicated generally by **450,** the spring elements **220** are coupled by transverse flexible support bars **460** and longitudinal support bars **510.** The support bars **460, 510** are preferable fabricated from one or more of a flexible polymer plastics material or thin spring steel strip. The transverse bars **460** are each pivotally mounted to their first neighbouring spring element **220** at a pivotal joint **470,** and to their second neighbouring element **220** at a slot pivotal joint **480** including a slot **490** for accommodating variations in separation between adjacent spring elements **220** in response to the bed-couch **105** being adjusted in stiffness in operation, for example to a pivot position denoted by **500** when the bed-couch **105** is in its fully retracted state **110.** The longitudinal support bars **510** are pivotally coupled to their respective spring elements **220** by pivotal joints **520, 530.** Moreover, the longitudinal bars **510** are beneficially provided with one or more load-spreading extensions **540** to provide the upper surface of the bed-couch **105** with a more spatial smooth stiffness characteristic.

As a further alternative, the load-spreading feature **210** is optionally included both above and below the array of spring elements **220.**

Referring to Figure 5, adjustment of stiffness of the bed-couch **105** is illustrated schematically. In its non-deployed retracted state **110,** the bed-couch **105** has a spatial separation of $d_1$ between neighbouring spring elements **220** in a traverse row of spring elements **220** along the Cartesian x axis and a spatial separation $d_3$ between neighbouring spring elements **220** in a longitudinal row of spring elements **220** along the Cartesian z axis. In its extended fully deployed state **120,** the bed-couch **105** has a spatial separation of $d_2$ between neighbouring spring elements **220** in a traverse row of spring elements **220** along the x axis and the spatial separation $d_3$ between neighbouring spring elements **220** in a longitudinal row of spring elements **220** along the z axis. The spatial separation $d_3$ is not limited to being equal to the spatial separations $d_1$ or $d_2$, and can assume a different value thereto. Optionally, the spatial separation $d_3$ is an average of the spatial separations $d_1$ or $d_2$, namely

$$d_3 = (d_1 + d_2)/2.$$

Optionally, the coupling elements **230** are implemented as fluid-tight bellows or cavities having flexible side walls, for example implemented in rubber material in a manner generally akin to an inner-tube of a tyre (tire), which are in mutual fluid communication and which can be inflated or deflated as required to adjust the spatial separation $d_1$, $d_2$. The driver **70** is then able to adjust and deploy the bed-couch **105** by operating a fluid pump, for example an air pump; when the fluid pump includes an electric motor to provide pumping force, adjustment of the bed or couch **105** can be executed by manipulating electrical inflate/deflate switches included within the cab **20.**

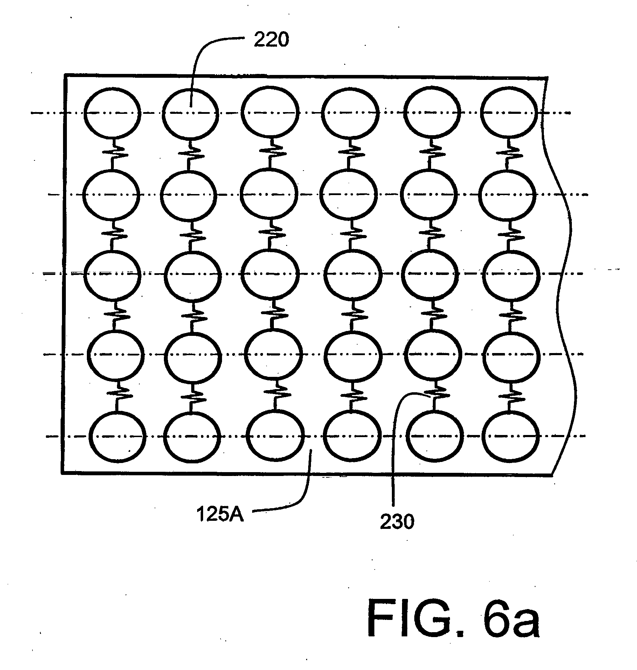

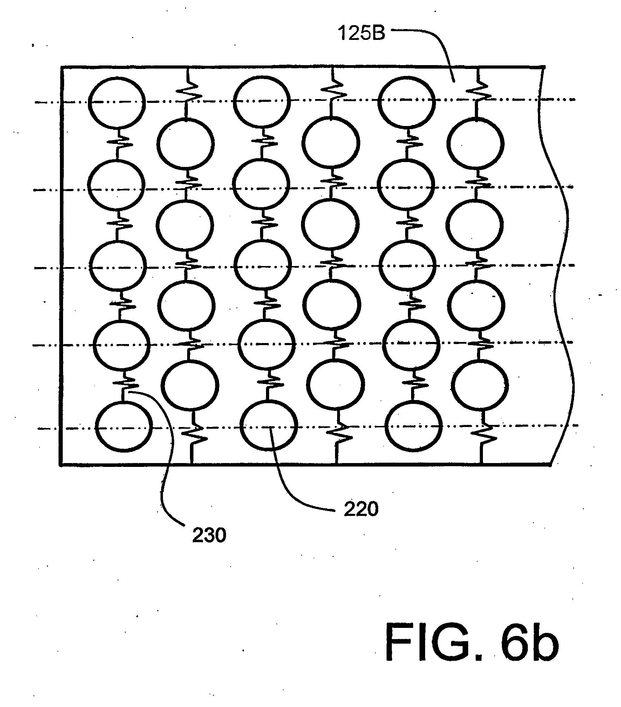

The aforesaid array of spring elements **220** are susceptible to being implemented in various spatial configurations. For example, in Figure 6a, the spring elements **220** are deployed in rows and columns as denotes by **125A** whose axes are substantially parallel or perpendicular at the Cartesian axes x, z in Figure 5. Alternatively, the spring elements **220** are disposed in a diagonal arrangement denoted by **126B** as shown in Figure 6B. The diagonal arrangement **126B** is of benefit in that the spring elements **220** can be mounted closer together for a given length of the coupling elements **230** for providing enhanced comfort.

In Figures 7 and 8, the bed-couch **105** is illustrated in its non-deployed retracted state **110** and in its fully extended deployed state **120.** As elucidated in the foregoing, the bed-couch **105** is continuously adjustable between the states **110, 120.** Moreover, the bed-couch **105** is useable by the driver **70** even when in its retracted non-deployed state **110** for resting or sleeping purposes and will then provide Its greatest support stiffness as elucidated in the foregoing. The bed-couch 105 is slidably retained on the support surface **160** of a bench or seat **600** at the rear portion of the cab **20.**

The bed-couch **105** is beneficially provided with a mechanism or feature for holding the array of spring elements **220** in a given desired state of extension to prevent the spring elements **220** springing back to the non-deployed state **110.** Such a mechanism can include, for example, one or more of:

(a) tabs **610** or similar fasteners on the bed-couch **105** which are attachable in operation at various positions along pivotal extensions **620** of the bench **600** in a vicinity at extreme corners of the bed-couch **105;** the pivotal extensions **620** are operable to be optionally folded down when the bed-couch 105 is in its retracted non-deployed state **110** as shown in Figure 7, and folded up as shown in Figure 8 for supporting extension of the bed-couch **105** when the bed-couch **105** is to be comfort adjusted;

(b) a mechanical screw, chain or worm drive which are drive **70** adjustable to apply an extension force to the array of spring elements **220** for maintaining therebetween a desired spatial separation $d_1$, $d_2$; and

(c) selective inflation or deflation of inflatable elements defining the spatial separation $d_1$, $d_2$.

The bed-couch **105** is of benefit, unlike known bed-couches, in that its support spring stiffness per unit area thereof is continuously adjustable across its entire body-supporting area in a highly controllable manner; such a characteristic is to be contrasted with known inflatable air beds which either provide a hard fully inflated state or a flaccid partially-deflated state, namely a non-continuously variable adjustment. Although adjustment of the bed-couch **105** along the x axis as shown in Figure 5 is described in the foregoing, it will appreciated that the bed-couch **105** can also be modified to be adjustable also in a direction generally along the z axis. Yet alternatively, the bed-couch **105** can be implemented so that its support stiffness is adjusted by modifying its length along the z axis so that the bed-couch **105** exhibits constant width whilst its stiffness is being adjusted.

Although deployment of the bed-couch **105** in heavy commercial vehicles is described in the foregoing, it will be appreciated that it can be employed in other applications, for example in one or more of:

(a) aquatic vessels such as yachts, ferries, cruise ships, cargo ships, submarines;
(b) in air-borne vehicles such as aircraft, space stations;
(c) in road vehicles and trailers such a caravans, coaches, buses, automobiles;
(d) in hospitals for improving patient comfort where a wide range of patient weights and preferences need to be accommodated;
(e) in domestic premises, for example in bedrooms;
(f) in massage parlours for massage beds; and
(e) in infant cots in nurseries.

## Claims

1. A bed-couch (105) including an upper supporting surface for receiving a person, said bed-couch (105) being operable to provide a flexible support characteristic at said upper surface for supporting said person, wherein said bed-couch (105) comprises an array of spatially distributed spring elements (220) for providing said flexible support characteristic, said array of distributed spring elements (220) having mutual spatial separations which are adjustable for affecting in operation a continuously-variable adjustment of said flexible support characteristic, wherein said bed-couch further comprises a load-spreading arrangement (200, 210) interposed between at least a portion of said array of spring elements (220) and said supporting upper surface, said load-spreading arrangement (200, 210) being operable to locally distribute load forces applied thereto so that said spring elements (200) are not substantially individually discernable by said person (70) when resting or sleeping on said upper support surface, and wherein said load-spreading arrangement (210) is adjustable in area in response to the bed-couch being adjusted in at least one of its width and its length, **characterized in that** the load-spreading feature (210) is implemented as a series of interleaved flexible sheets (310) which are operable to glide with respect to one another to accommodate adjustment of the bed-couch (105) between its contracted state (110) and its extended deployed state (120), wherein the interleaved flexible sheets (310) are interleaved to a greater extent when the bed-couch (105) is in its non-deployed retracted state (110) in comparison to being interleaved to a lesser extent when the bed-couch (105) is in its fully deployed expanded state (120), that the interleaved flexible sheets (310) are elongate in a direction substantially parallel with an elongate longitudinal axis z of the bed-couch (105), and that the interleaved flexible sheets (310) are coupled to their respective spring elements (220) so that their degree of interleaving is uniformly distributed amongst the sheets (310) as the bed-couch (105) is adjusted in stiffness in operation.

2. A bed-couch (105) including an upper supporting surface for receiving a person, said bed-couch (105) being operable to provide a flexible support characteristic at said upper surface for supporting said person, wherein said bed-couch (105) comprises an array of spatially distributed spring elements (220) for providing said flexible support characteristic, said array of distributed spring elements (220) having mutual spatial separations which are adjustable for affecting in operation a continuously-variable adjustment of said flexible support characteristic, wherein said bed-couch further comprises a load-spreading arrangement (200, 210) interposed between at least a portion of said array of spring elements (220) and said supporting upper surface, said load-spreading arrangement (200, 210) being operable to locally distribute load forces applied thereto so that said spring elements (200) are not substantially individually discernable by said person (70) when resting or sleeping on said upper support surface, and wherein said load-spreading arrangement (210) is adjustable in area in response to the bed-couch being adjusted in at least one of its width and its length, **characterized in that** the load-spreading arrangement (210) is a zigzag concertina-type component (430) whose folds are elongate in a direction substantially parallel to the longitudinal axis z of the bed-couch (105).

3. A bed-couch (105) including an upper supporting surface for receiving a person, said bed-couch (105) being operable to provide a flexible support characteristic at said upper surface for supporting said person, wherein said bed-couch (105) comprises an array of spatially distributed spring elements (220) for providing said flexible support characteristic, said array of distributed spring elements (220) having mutual spatial separations which are adjustable for affecting in operation a continuously-variable adjustment of said flexible support characteristic, wherein said bed-couch further comprises a load-spreading arrangement (200, 210) interposed between at least a portion of said array of spring elements (220) and said supporting upper surface, said load-spreading arrangement (200, 210) being operable to locally distribute load forces applied thereto so that said spring elements (200) are not substantially individually discernable by said person (70) when resting or sleeping on said upper support surface, and wherein said load-spreading arrangement (210) is adjustable in area in response to the bed-couch being adjusted in at least one of its width and its length, **characterized in that** the spring elements (220) are coupled by transverse flexible support bars (460) and longitudinal support bars (510), wherein the transverse bars (460) are each pivotally mounted to their first neighbouring spring element (220) at a pivotal joint (470), and to their second neighbouring spring element (220) at a slot pivotal joint (480) including a slot (490) for accommodating variations in separation between adjacent spring elements (220) in response to the bed-couch (105) being adjusted in stiffness in operation, and wherein the longitudinal support bars (510) are pivotally coupled to their respective spring elements (220) by pivotal joints (520, 530).

**Patentansprüche**

1. Bettcouch (105), die eine obere Stützfläche zur Aufnahme einer Person aufweist, wobei die Bettcouch (105) zur Bereitstellung einer flexiblen Stützeigenschaft an der oberen Oberfläche zur Stützung der Person anwendbar ist, wobei die Bettcouch (105) eine Anordnung von räumlich verteilten Federelementen (220) zur Bereitstellung der flexiblen Stützeigenschaft umfasst, wobei die Anordnung von verteilten Federelementen (220) gegenseitig räumliche Trennungen aufweist, die einstellbar sind, um bei Anwendung eine fortlaufend variable Einstellung der flexiblen Stützeigenschaft zu bewirken, wobei die Bettcouch außerdem eine lastverteilende Anordnung (200, 210) umfasst, die zwischen wenigstens einem Abschnitt der Anordnung von Federelementen (220) und der oberen Stützfläche angeordnet ist, wobei die lastverteilende Anordnung (200, 210) anwendbar ist, um darauf ausgeübte Lastkräfte lokal zu verteilen, so dass die Federelemente (200) individuell im Wesentlichen nicht durch die Person (70) wahrnehmbar sind, wenn sie auf der oberen Stützfläche ruht oder schläft, und wobei die Fläche der lastverteilenden Anordnung (210) ansprechend darauf einstellbar ist, dass wenigstens eine von ihrer Breite und ihrer Länge eingestellt wird, **dadurch gekennzeichnet, dass** die lastverteilende Anordnung (210) als eine Reihe von ineinander verschachtelten Platten (310) ausgeführt ist, die so anwendbar sind, dass sie bezüglich einander gleiten, um eine Einstellung der Bettcouch (105) zwischen ihrem eingefahrenen Zustand (110) und ihrem ausgefahrenen Anwendungszustand (120) aufzunehmen, wobei die verschachtelten flexiblen Platten (310) in einem größeren Ausmaß verschachtelt sind, wenn sich die Bettcouch (105) in ihrem zurückgezogenen Nichtanwendungszustand (110) befindet, verglichen mit einer Verschachtelung in geringerem Ausmaß, wenn die Bettcouch (105) sich in ihrem vollständig ausgefahrenen Verwendungszustand (102) befindet, dass die verschachtelten flexiblen Platten (310) sich längs in einer Richtung erstrecken, die im Wesentlichen parallel zu einer in Längsrichtung verlaufenden Längsachse z der Bettcouch (105) ist, und dass die verschachtelten flexiblen Platten (310) mit ihren jeweiligen Federelementen (220) so gekoppelt sind, dass ihr Grad der Verschachtelung gleichmäßig innerhalb der Platten (310) verteilt ist, wenn die Steifheit der Bettcouch (105) bei der Anwendung eingestellt wird.

2. Bettcouch (105), die eine obere Stützfläche zur Aufnahme einer Person aufweist, wobei die Bettcouch (105) zur Bereitstellung einer flexiblen Stützeigenschaft an der oberen Oberfläche zur Stützung der Person anwendbar ist, wobei die Bettcouch (105) eine Anordnung von räumlich verteilten Federelementen (220) zur Bereitstellung der flexiblen Stützeigenschaft umfasst, wobei die Anordnung von verteilten Federelementen (220) gegenseitig räumliche Trennungen aufweist, die einstellbar sind, um bei Anwendung eine fortlaufend variable Einstellung der flexiblen Stützeigenschaft zu bewirken, wobei die Bettcouch außerdem eine lastverteilende Anordnung (200, 210) umfasst, die zwischen wenigstens einem Abschnitt der Anordnung von Federelementen (220) und der oberen Stützfläche angeordnet ist, wobei die lastverteilende Anordnung (200, 210) anwendbar ist, um darauf ausgeübte Lastkräfte lokal zu verteilen, so dass die Federelemente (200) individuell im Wesentlichen nicht durch die Person (70) wahrnehmbar sind, wenn sie auf der oberen Stützfläche ruht oder schläft, und wobei die Fläche der lastverteilenden Anordnung (210) ansprechend darauf einstellbar ist, dass wenigstens eine von ihrer Breite und ihrer Länge eingestellt wird, **dadurch gekennzeichnet, dass** die lastverteilende Anordnung (210) eine zickzackförmige ziehharmonikaartige Komponente (430) ist, deren Falten in einer Richtung längs verlaufen, die im Wesentlichen parallel zu der Längsachse z der Bettcouch (105) ist.

3. Bettcouch (105), die eine obere Stützfläche zur Aufnahme einer Person aufweist, wobei die Bettcouch (105) zur Bereitstellung einer flexiblen Stützeigenschaft an der oberen Oberfläche zur Stützung der Person anwendbar ist, wobei die Bettcouch (105) eine Anordnung von räumlich verteilten Federelementen (220) zur Bereitstellung der flexiblen Stützeigenschaft umfasst, wobei die Anordnung von verteilten Federelementen (220) gegenseitig räumliche Trennungen aufweist, die einstellbar sind, um bei Anwendung eine fortlaufend variable Einstellung der flexiblen Stützeigenschaft zu bewirken, wobei die Bettcouch außerdem eine lastverteilende Anordnung (200, 210) umfasst, die zwischen wenigstens einem Abschnitt der Anordnung von Federelementen (220) und der oberen Stützfläche angeordnet ist, wobei die lastverteilende Anordnung (200, 210) anwendbar ist, um darauf ausgeübte Lastkräfte lokal zu verteilen, so dass die Federelemente (200) individuell im Wesentlichen nicht durch die Person (70) wahrnehmbar sind, wenn sie auf der oberen Stützfläche ruht oder schläft, und wobei die Fläche der lastverteilenden Anordnung (210) ansprechend darauf einstellbar ist, dass wenigstens eine von ihrer Breite und ihrer Länge eingestellt wird, **dadurch gekennzeichnet, dass** die Federelemente (220) durch quer verlaufende flexible Stützstangen (460) und in Längsrichtung verlaufende Stützstangen (510) gekoppelt sind, wobei die Querstangen (460) jeweils schwenkbar an ihrem ersten benachbarten Federelement (220) an einer Gelenkverbindung (470) und an ihrem zweiten benachbarten Federelement (220) an einer Schlitzgelenkverbindung (480) angebracht sind, die einen Schlitz (490) zur Aufnahme von Änderungen der Trennung zwischen angrenzenden Federelementen (220) in Ansprechung darauf aufweist, dass die Steifheit der Bettcouch (105) bei Anwendung eingestellt wird, und wobei die in Längsrichtung verlaufenden Stützstangen schwenkbar an ihre jeweiligen Federelemente (220) durch Gelenkverbindungen (520, 530) gekoppelt sind,

**Revendications**

1. Lit-couchette (105) comportant une surface de support supérieure pour recevoir une personne, ledit lit-couchette (105) pouvant fonctionner pour fournir une caractéristique de support flexible au niveau de ladite surface supérieure pour supporter ladite personne, où ledit lit-couchette (105) comprend un réseau d'éléments élastiques distribués spatialement (220) pour fournir ladite caractéristique de support flexible, ledit réseau d'éléments élastiques distribués (220) ayant des séparations spatiales mutuelles qui sont réglables pour affecter, en cours de fonctionnement, un réglage variable en continu de ladite caractéristique de support flexible, où ledit lit-couchette comprend en outre un agencement de répartition de charge (200, 210) interposé entre au moins une partie dudit réseau d'éléments élastiques (220) et ladite surface supérieure de support, ledit agencement de répartition de charge (200, 210) pouvant fonctionner pour distribuer localement des forces de charge appliquées à celui-ci de sorte que lesdits éléments élastiques (200) ne soient essentiellement pas discernables individuellement par ladite personne (70) lorsque cette dernière repose ou dort sur ladite surface de support supérieure, et où la superficie dudit agencement de répartition de charge (210) est réglable en réponse au réglage d'au moins l'une de la largeur et de la longueur du lit-couchette, **caractérisé en ce que** l'élément de répartition de charge (210) est mis en oeuvre en tant que série de feuilles flexibles entrelacées (310) qui peuvent fonctionner pour glisser les unes par rapport aux autres pour recevoir le réglage du lit-couchette (105) entre son état contracté (110) et son état déployé étendu (120), où les feuilles flexibles entrelacées (310) sont entrelacées dans une mesure plus grande lorsque le lit-couchette (105) est dans son état rétracté non déployé (110) par rapport au fait d'être entrelacées dans une mesure plus faible lorsque le lit-couchette (105) est dans son état complètement déployé étendu (120), **en ce que** les feuilles flexibles entrelacées (310) sont allongées dans une direction essentiellement parallèle à un axe longitudinal allongé z du lit-couchette (105), et **en ce que** les feuilles flexibles entrelacées (310) sont couplées à leurs éléments élastiques respectifs (220) de sorte que leur degré d'entrelacement soit uniformément distribué parmi les feuilles (310) à mesure que le lit-couchette (105) est réglé en rigidité en cours de fonctionnement.

2. Lit-couchette (105) comportant une surface de support supérieure pour recevoir une personne, ledit lit-couchette (105) pouvant fonctionner pour fournir une caractéristique de support flexible au niveau de ladite surface supérieure pour supporter ladite personne, où ledit lit-couchette (105) comprend un réseau d'éléments élastiques distribués spatialement (220) pour fournir ladite caractéristique de support flexible, ledit réseau d'éléments élastiques distribués (220) ayant des séparations spatiales mutuelles qui sont réglables pour affecter, en cours de fonctionnement, un réglage variable en continu de ladite caractéristique de support flexible, où ledit lit-couchette comprend en outre un agencement de répartition de charge (200, 210) interposé entre au moins une partie dudit réseau d'éléments élastiques (220) et ladite surface supérieure de support, ledit agencement de répartition de charge (200, 210) pouvant fonctionner pour distribuer localement des forces de charge appliquées à celui-ci de sorte que lesdits éléments élastiques (200) ne soient essentiellement pas discernables individuellement par ladite personne (70) lorsque cette dernière repose ou dort sur ladite surface de support supérieure, et où la superficie dudit agencement de répartition de charge (210) est réglable en réponse au réglage d'au moins l'une de la largeur et de la longueur du lit-couchette, **caractérisé en ce que** l'agencement de répartition de charge (210) est un composant de type accordéon en zigzag (430) dont les plis sont allongés dans une direction essentiellement parallèle à l'axe longitudinal z du lit-couchette (105).

3. Lit-couchette (105) comportant une surface de support supérieure pour recevoir une personne, ledit lit-couchette (105) pouvant fonctionner pour fournir une caractéristique de support flexible au niveau de ladite surface supérieure pour supporter ladite personne, où ledit lit-couchette (105) comprend un réseau d'éléments élastiques distribués spatialement (220) pour fournir ladite caractéristique de support flexible, ledit réseau d'éléments élastiques distribués (220) ayant des séparations spatiales mutuelles qui sont réglables pour affecter, en cours de fonctionnement, un réglage variable en continu de ladite caractéristique de support flexible, où ledit lit-couchette comprend en outre un agencement de répartition de charge (200, 210) interposé entre au moins une partie dudit réseau d'éléments élastiques (220) et ladite surface supérieure de support, ledit agencement de répartition de charge (200, 210) pouvant fonctionner pour distribuer localement des forces de charge appliquées à celui-ci de sorte que lesdits éléments élastiques (200) ne soient essentiellement pas discernables individuellement par ladite personne (70) lorsque cette dernière repose ou dort sur ladite surface de support supérieure, et où la superficie dudit agencement de répartition de charge (210) est réglable en réponse au réglage d'au moins l'une de la largeur et de la longueur du lit-couchette, **caractérisé en ce que** les éléments élastiques (220) sont couplés par des barres de support flexibles transversales (460) et des barres de support longitudinales (510), où chacune des barres transversales (460) est montée en pivotement sur son premier élément élastique voisin (220) au niveau d'un joint pivotant (470), et sur son deuxième élément élastique voisin (220) au niveau d'un joint pivotant à fente (480) comportant une fente (490) pour recevoir des variations dans une séparation entre des éléments élastiques adjacents (220) en réponse au réglage du lit-couchette (105) en rigidité en cours de fonctionnement, et où les barres de support longitudinales (510) sont couplées en pivotement à leurs éléments élastiques respectifs (220) par des joints pivotants (520, 530).

10

20

40

50

70

60

100

30

FIG. 1

FIG. 2

FIG. 3

FIG. 4

110

z

x

d₁

220

d₃

d₂

220

230

120

# FIG. 5

220

125A

230

FIG. 6a

125B

230

220

# FIG. 6b

220

110

600

FIG. 7

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- SE 518584 C2

- US 1721647 A